# EUROPEAN PATENT SPECIFICATION

(11) **EP 1 403 126 B1**
(45) Date of publication and mention of the grant of the patent: **18.06.2008**
(21) Application number: 03020274.1
(22) Date of filing: 08.09.2003
(51) Int. Cl.: B60K 37/02

(54) **Two-wheeled motor vehicle having an information display apparatus**
Motorrad mit einem Informationsanzeigegerät
Véhicule motorisé à deux roues comportant un dispositif d'information

(30) Priority: 30.09.2002 JP 2002288025
(43) Date of publication of application: 31.03.2004
(73) Proprietor: HONDA GIKEN KOGYO KABUSHIKI KAISHA, Minato-ku, Tokyo (JP)
(72) Inventor: Murakami, Kazuhiro, Wako-shi, Saitama (JP)
(74) Representative: Liska, Horst

(56) References cited:
- EP-A- 0 805 338
- DE-A- 19 619 899
- PATENT ABSTRACTS OF JAPAN vol. 1995, no. 09, 31 October 1995 (1995-10-31) & JP 7 159554 A (SEIKO EPSON CORP), 23 June 1995 (1995-06-23)

## Description

The present invention relates to a two-wheeled motor vehicle having an information display apparatus for displaying information mainly to a vehicle operator. A two-wheeled motor vehicle having an information display apparatus according to the preamble of claim 1 is known from EP-A-0 805 338. A bicycle data recorder is known from DE-A-196 19 899.

As further technologies related to information display apparatus for vehicle use for displaying vehicle information and the like mainly to a vehicle operator, for example, there are those that display the result of a stop watch measurement (for example, refer to Patent Document 1. and Patent Document 2), and those that display maintenance information (for example, refer to Patent Document 3 and Patent Document 4) and so on.
Patent Document 1:
   Japanese published unexamined application Hei. 8-133152
Patent Document 2:
   Japanese published unexamined application Sho. 58-4784
Patent Document 3:
   Japanese published unexamined application No. 2541812
Patent Document 4 :
   Japanese published examined application No. 4-48655

Meanwhile, in recent years, in order to increase the commercial appeal of a vehicle, it has become important to provide a vehicle with various functions. These types of requirement also apply to the information display apparatus for vehicle use for displaying vehicle information to a vehicle operator, and with the information display apparatus for a vehicle of the prior art described above, the display content becomes insufficient.

The object of the present invention is to provide a two-wheeled motor vehicle having an information display apparatus which allows a convenient operation of the information display apparatus even while driving the two-wheeled motor vehicle.

This object is achieved by a two-wheeled motor vehicle having an information display apparatus according to claim 1.

In an information display apparatus for a vehicle having a display section (for example display section 11 in the embodiment) that receives a detection signal from a plurality of detection means, which detect vehicle-related information, and displays the vehicle-related information, the display section is connected to clock means (for example system clock 21 in the embodiment) mounted on the vehicle, and based on the output signal from the clock means and the detection signal from the driving distance detection means (for example wheel rotation speed sensor 27 in the embodiment) that detects the driving distance of the vehicle, among the plurality of detection means, driving distance per day of the vehicle is calculated and displayed.

In this way, since the display section calculates and displays the driving distance per day of the vehicle based on the output signal from the clock means and the detection signal of the detection means mounted on the vehicle, vehicle-related information, such as the driving distance per day of the vehicle, can be displayed.

An embodiment of the information display apparatus for a vehicle of the present invention will be explained in the following with reference to the drawings, in which:
Fig. 1 is a front view showing the information display apparatus for a vehicle of one embodiment of the present invention.
Fig. 2 is a block diagram showing the information display apparatus for a vehicle of one embodiment of the present invention.
Fig. 3 is a front view showing the display switch portion main body of the information display apparatus for a vehicle of one embodiment of the present invention.
Fig. 4 is a front view showing the display switch portion main body of the information display apparatus for a vehicle of one embodiment of the present invention.
Fig. 5 is a sectional side view of the information display apparatus for a vehicle of one embodiment of the present invention.
Fig. 6 is a side view of the information display apparatus for a vehicle of one embodiment of the present invention.
Fig. 7 is a view where the case main body portion of the information display apparatus for a vehicle of one embodiment of the present invention as seen from the backside.
Fig. 8 is a sectional view that follows the X-X line in Fig. 7 of the information display apparatus for vehicle of one embodiment of the present invention.
Fig. 9 is a sectional view that follows the Y-Y line in Fig. 7 of the information display apparatus for vehicle of one embodiment of the present invention.

In addition, front, back, left and right in the explanation below are back, left and right taking the forward direction of the vehicle as a reference.

An information display apparatus for a vehicle 10 of the present embodiment is mounted on a vehicle. Specifically, it is a so-called combination meter that is installed on a two-wheeled motor vehicle, and, shown simplified in the figure, it is mounted on the top bridge in a state where it is placed on the front side of the handlebar, above the head light.

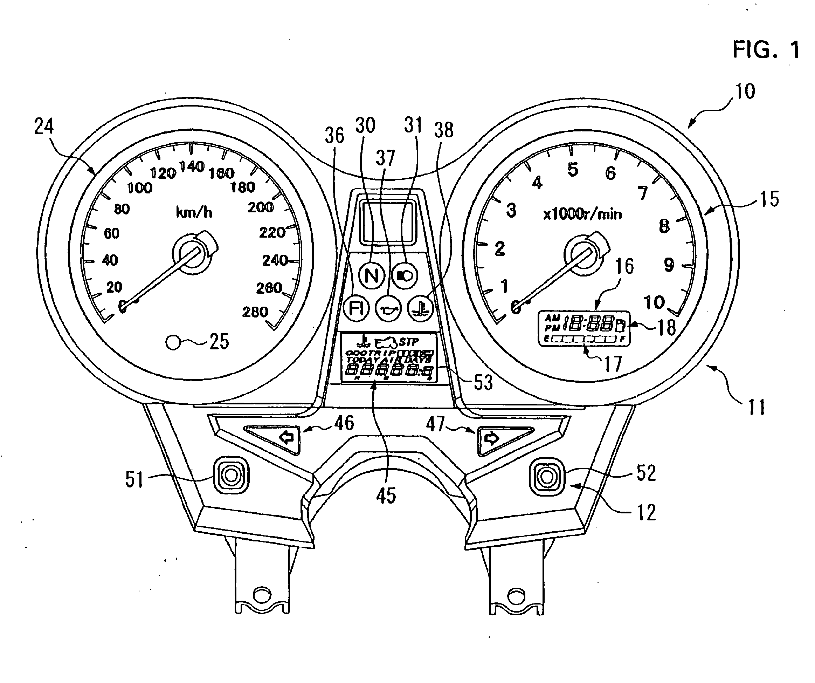

The information display apparatus for a vehicle 10 of the present embodiment, as shown in Fig. 1, has a display section 11 installed on the front side, which performs display of vehicle-related information mainly to the vehicle operator, and an operation input portion 12 mounted on the rear side, where operation input is performed mainly by the vehicle operator.

The display section 11 is connected to a plurality of detection means that detect information related to the vehicle, and receives a detection signal from these detection means to display information related to the vehicle.

Specifically, the display section 11 has an analog type tachometer 15, which is installed on the right side of the front portion, a digital type time displaying section 16, which is installed on the rear side of this tachometer 15, a fuel indicator 17, which is installed on the rear side of this time displaying section 16 and a fuel warning display section 18, which is installed on the right side of the time displaying section 16.

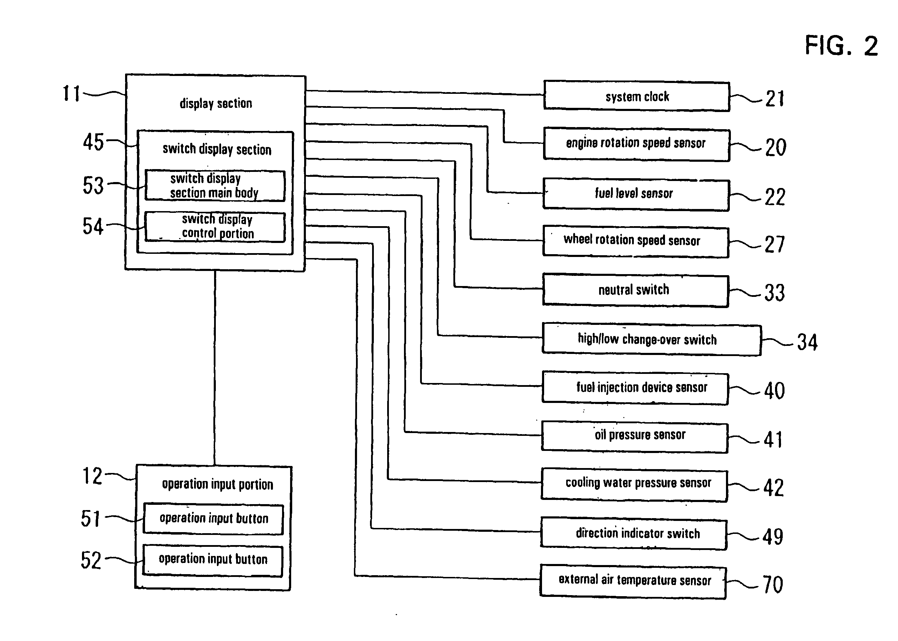

The tachometer 15 displays the engine rotation speed based on the detection signal from an engine rotation speed sensor (detection means) 20 shown in Fig. 2, which detects the engine rotation speed.

The time displaying section 16 displays the time based on the output signal from a system clock (clock means) 21 shown in Fig. 2. The fuel indicator 17 displays the amount of fuel remaining in a fuel tank, not shown in the figure, by illuminating numbers according to the remaining amount, based on the detection signal from a fuel level sensor (detection means) 22 shown in Fig. 2.

When the amount of fuel remaining in the fuel tank, not shown in the figure, reaches a prescribed value or less based on the detection signal of the fuel level sensor 22, the fuel warning display section 18 displays this by lighting up, and it is turned off for other states.

In addition, the display section 11 has an analog type speed meter 24, which is installed on the left side of the front portion, and an indicator lamp 25 for theft prevention use, which is installed on the rear side of this speed meter 24.

The speed meter 24 displays the speed of the vehicle body based on the detection signal from a wheel rotation speed sensor (detection means, driving distance detection means) 27, shown in Fig. 2, which detects the rotation speed of wheels.

If, for example, the key is pulled out from the ignition switch, not shown in the figure, for a duration of a prescribed time, the indicator lamp 25 for theft prevention use indicates by blinking that a theft prevention device, not shown in the figure, is in operation.

In addition, the display section 11 has a neutral lamp 30 and a high beam lamp 31, in the front row at the center of the front portion.

Based on the detection signal from a neutral switch (detection means) 33, shown in Fig. 2, which detects the fact that the transmission, not shown in the figure, is in the neutral position, the neutral lamp 30 indicates this by lighting up if neutral, and it is turned off if not. In addition, the letter "N", the first letter of neutral, is written on the neutral lamp 30.

Based on the signal from a high/low change-over switch (detection means) 34, shown in Fig. 2, which switches a head light, not shown in the figure, on in the upper direction, if the status is on in the upper direction, the high beam lamp 31 displays this by lighting up, and it is turned off if not. In addition, a symbol that shows the fact that the status is high beam is written on the high beam lamp 31.

In addition, the display section 11 has a warning lamp 36 for a fuel injection device, an oil pressure warning lamp 37 and a cooling water temperature warning lamp 38, in the middle row at the center of the front portion.

Based on the detection signal from a fuel injection device sensor (detection means) 40, shown in Fig. 2, which detects anomalies in the electronically controlled fuel injection device, not shown in the figure, if there is an anomaly in the electronically controlled fuel injection device, the fuel injection device warning lamp 36 displays this by lighting up, and it is turned off if not. In addition, the letters "FI", which indicate the fuel injection device, are written on the fuel injection device warning lamp 36.

Based on the detection signal from an oil pressure sensor (detection means) 41, shown in Fig. 2, which detects that the amount of engine oil in the has reached a prescribed value or lower, if the amount of engine oil reaches a prescribed value or less, the oil pressure warning lamp 37 indicates this by lighting up, and it is turned off if not. In addition, a symbol that indicates the amount of oil is written on the oil pressure warning lamp 37.

Based on the detection signal from a cooling water pressure sensor (detection means) 42, shown in Fig. 2, which detects the temperature of the cooling water of the radiator, not shown in the figure, if the cooling water temperature reaches a prescribed value or above, the cooling water temperature warning lamp 38 displays this by lighting up, and it is lit off if not. In addition, a symbol that indicates the cooling water temperature is written on the cooling water temperature warning lamp 38.

In addition, the display section 11 has a switch-display section 45 in the rear row at the center of the front portion, and a left side turning indicator lamp 46 and a right side turning indicator lamp 47 on the rear side.

Based on the signal from a direction indicator switch (detection means) 49, shown in Fig. 2, which switches the blinking of a turning indicator lamp, not shown in the figure, to the left or to the right, if the turning indicator lamp on the left side is in the blinking state, the left side turning indicator lamp 46, displays this by blinking, and it is turned off if not. In addition, the symbol "←" is written on the left side turning indicator lamp 46.

Based on the signal from the direction indicator switch 49, if the right side turning indicator lamp is in the blinking state, the right side turning indicator lamp 47 displays this by blinking, and it is turned off if not. In addition, the symbol "→" is written on the left side turning indicator lamp 47.

Then, in the vicinity of each of the left side turning indicator lamp 46 and right side turning indicator lamp 47, on their rear side, operation input buttons 51 and 52 are installed at two locations, which constitute the operation input portion 12.

The switch-display section 45 mentioned above has a switch display section main body 53, which performs display, and a switch display control portion 54, shown in Fig. 2, which controls display of the switch display section main body 53 whose display mode is switched through the appropriate operation of the operation input buttons 51 and 52 at two locations, which constitute the operation input portion 12, which are connected to the switch display control portion 54.

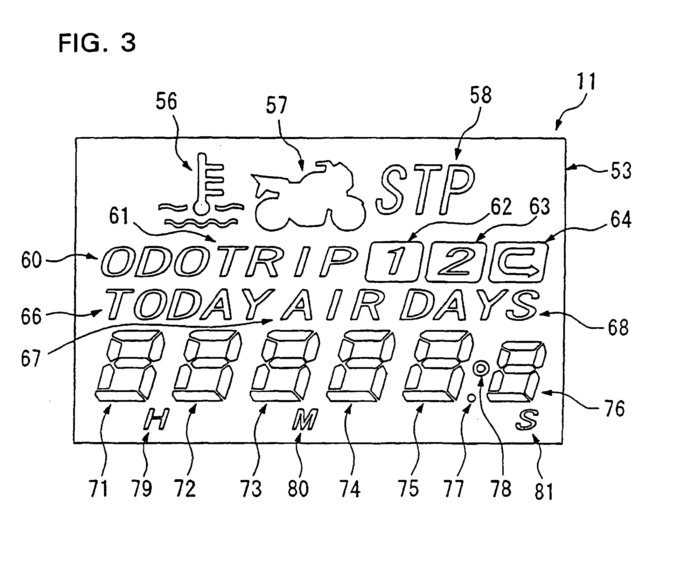

As shown in Fig. 3, the switch display section main body 53 has a cooling water temperature display mode-display section 56 and a maintenance indicator 57 and a stopwatch mode-display section 58 in its front row.

Based on the detection signal from the cooling water pressure sensor 42, shown in Fig. 2, if the cooling water temperature display mode, which displays the cooling water temperature is entered by selection, the cooling water temperature display mode display section 56 shows a symbol that indicates the cooling water temperature by lighting it up, and it is turned off if not.

Based on the output signal from the system clock 21 and the like, shown in Fig. 2, if the time measured from the time point when previous maintenance was performed and a reset operation was executed exceeds a prescribed length of time, the maintenance indicator 57 displays the image of a motorcycle by lighting it up, and it is turned off if not. In addition, the rider can also set the date and time of safety inspections or checkups at will, and light up the maintenance indicator 57 at the set date and time.

When the stop watch mode is entered by selection, which executes stop watch measurements based on the output signal of the system clock 21, the stop watch mode display section 58 displays the letters "STP" by lighting them up, and they are turned off if not.

In addition, the switch display section main body 53 has an odometer mode-display section 60, a trip meter mode-display section 61, a first trip meter mode-display section 62, a second trip meter mode-display section 63 and a subtractive trip meter mode-display section 64, at its middle front row.

When the odometer mode, which displays the total driving distance based on the detection signal from the wheel rotation speed sensor 27, shown in Fig. 2, which detects the rotation speed of a wheel, is entered by selection, the odometer mode display section 60 displays the letters "ODO" by lighting them up, and they are turned off if not.

Based on the detection signal from the wheel rotation speed sensor 27, if either one of the two types of first trip meter mode and second trip meter mode, which display the driving distance from the point of time when the previous reset operation was executed, is entered by selection, and further if the mode for additive display is entered by selection, the trip meter mode display section 61 displays the letters "TRIP" by lighting them up, and they are turned off if not.

When the first trip meter mode, which displays the driving distance from the point in time when the previous reset operation was executed, is entered by selection, the first trip meter mode display section 62 displays the letter "1" by lighting it up, and it is turned off if not.

When the second trip meter mode, which displays the driving distance from the point in time when the previous reset operation was executed, is entered by selection, the second trip meter mode display section 63 displays the letter "2" by lighting it up, and it is turned off if not.

If either one of the two types of first trip meter mode and second trip meter mode is entered by selection, and further if the mode for subtractive display is entered by selection, the subtractive trip meter mode-display section 64 displays a symbol that displays that it is in subtractive display mode by lighting it up, and it is turned off if not.

In addition, the switch display section main body 53 has a current day driving distance mode display section 66, an external air temperature display mode display section 67 and a date input mode display section 68, in its center rear row.

Based on the output signal from the system clock 21 and the detection signal from the wheel rotation speed sensor 27, shown in Fig. 2, when the current day driving distance mode, which calculates and displays the driving distance of the vehicle of the current day (from 0:00 midnight to 0:00 midnight the next day) that is per day, is entered by selection, the current day driving distance mode display section 66 displays the letters "TODAY" by lighting them up, and they are turned off if not.

When in the external air temperature display mode, which displays the external air temperature based on the detection signal from the external air temperature sensor (detection means) 70, described below, is entered by selection, the external air temperature display mode display section 67 displays the letters "AIR" by lighting them up, and they are turned off if not.

If the date input mode is entered by selection, in which, for example, the date of the system clock is entered or the date when the maintenance indicator is to be displayed is entered, the date input mode display section 68 displays the letters "DAYS" by lighting them up, and they are turned off if not.

In addition, the switch display section main body 53 has, in the rear row, sequentially from the left side, a first display section 71, a second display section 72, a third display section 73, a fourth display section 74, a fifth display section 75 and a sixth display section 76, as well as a decimal point display section 77 at the rear side position between the fifth display section 75 and the sixth display section 76, and a degree display section 78 at the middle position in the front-rear direction between the fifth display section 75 and the sixth display section 76, respectively.

In addition, the switch display section main body 53 has an hours display section 79 on the rear side of a position between the first display section 71 and the second display section 72, a minutes display section 80 on the rear side of a position between the third display section 73 and the fourth display section 74, and a seconds display section 81 on the rear side of a position of the sixth display section 76 opposite to the fifth display section 75, respectively.

The first display section 71, the second display section 72, the third display section 73, the fourth display section 74, the fifth display section 75 and the sixth display section 76 each have 7-segment light emitting elements and display the numbers "0" through "9" by lighting them up as necessary. In addition, only the sixth display section 76 can further display the letter "C" with 3 segments below the center by lighting them up as necessary.

The decimal point display section 77 displays ".", which indicates the decimal point, between the fifth display section 75 and the sixth display section 76 by lighting it up as necessary.

The degree.display section 78 displays "°" between the fifth display section 75 and the sixth display section 76 by lighting it up as necessary to displays display "°C", which indicates the temperature, in combination with the "C" that has been displayed by lighting it up at the sixth display section 76.

The hours display section 79 displays "H", which indicates the hours, by lighting it up as necessary at a position between the first display section 71 and the second display section 72, the minutes display section 80 displays "M", which indicates the minutes, by lighting it up as necessary at a position between the third display section 73 and fourth display section 74, and the seconds display section 81 displays "S", which indicates the seconds, by lighting it up as necessary on the outer side of the sixth display section 76.

Then, for example, if the cooling water temperature display mode is entered by selection via an appropriate operation of the operation input buttons 51 and 52 at two locations, which constitute the operation input portion 12, the switch display control portion 54, based on the detection signal from the cooling water pressure sensor 42, displays the numbers of the cooling water temperature in the fourth display section 74 and the fifth display section 75 by lighting them up while displaying the symbol that indicates the cooling water temperature in the cooling water temperature display mode display section 56, in addition, it displays "C" in the sixth display section 76 by lighting it up while it displays "°" in the degree display section 78 by lighting it up, to display "°C" by lighting it up.

In addition, for example, if the stop watch mode is entered by selection via an appropriate operation of the operation input buttons 51 and 52, the switch display control portion 54 displays the letters "STP" by lighting them up in the stop watch mode display section 58.

In this state, if a stop watch measurement based on the output signal from the system clock 21 is performed via an appropriate operation of the operation input buttons 51 and 52, the switch display control portion 54 displays ".", which indicates the decimal point, by lighting it up in the decimal point display section 77, displays "H", which indicates the hours, by lighting it up in the hours display section 79, displays "M", which indicates the minutes, by lighting it up in the minutes display section 80, and displays "S", which indicates the seconds, by lighting it up in the display section 81, while displaying the numbers of this measurement value by lighting them up in the first display section 71, the second display section 72, the third display section 73, the fourth display section 74, the fifth display section 75 and the sixth display section 76.

In doing so, the switch display control portion 54 displays a number that is an integer for hour units in the first display section 71, a two-digit number that is an integer for minute units in the second display section 72 and the third display section 73, a two-digit number that is an integer for second units in the fourth display section 74 and the fifth display section 75, and a number that is smaller than a second unit in the sixth display section 76, by lighting them up, respectively.

In addition, for example, if the odometer mode is entered by selection via an appropriate operation of the operation input buttons 51 and 52, the switch display control portion 54 displays "ODO", which indicates displaying of the total driving distance, by lighting it up in odometer mode display section 60. In addition, the switch display control portion 54 displays the total driving distance that it has been adding and memorizing based on the detection signal from the wheel rotation speed sensor 27 among the first display section 71, by lighting up the necessary elements among the second display section 72, the third display section 73, the fourth display section 74, the fifth display section 75 and the sixth display section 76, and displays ".", which indicates the decimal point by lighting it up in the decimal point display section 77.

In doing so, the switch display control portion 54 displays a five-digit number that is an integer for Km units by lighting it up in the first display section 71, the second display section 72, the third display section 73, the fourth display section 74 and the fifth display section 75, and a number that is 100 m units in the sixth display section 76, respectively.

In addition, for example, if the first trip meter mode is entered by selection via an appropriate operation of the operation input buttons 51 and 52, the switch display control portion 54 displays the letter "1" by lighting it up in the first trip meter mode display section 62 while displaying the letters "TRIP" by lighting it up in the trip meter mode display section 61. In addition, the switch display control portion 54 displays ".", which indicates the decimal point, by lighting it in the decimal point display section 77, while displaying the driving distance that it has been adding and memorizing based on the detection signal from the wheel rotation speed sensor 27 since the latest reset time of the first trip meter mode by lighting up the necessary elements among the first display section 71, the second display section 72, the third display section 73, the fourth display section 74, the fifth display section 75 and the sixth display section 76. In addition, displaying of the distance is the same as in the odometer mode mentioned above.

In addition, for example, the second trip meter mode is entered by selection via an appropriate operation of the operation input buttons 51 and 52 at two locations, the switch display control portion 54 displays the letter "2" by lighting it up in the second trip meter mode display section 63 while displaying the letters "TRIP" by lighting it up in the trip meter mode display section 61. In addition, the switch display control portion 54 displays ".", which indicates the decimal point by lighting it in the decimal point display section 77, while displaying the driving distance that it has been adding and memorizing based on the detection signal from the wheel rotation speed sensor 27 since the latest reset time of the second trip meter mode by lighting up the necessary elements among the first display section 71, the second display section 72, the third display section 73, the fourth display section 74, the fifth display section 75 and the sixth display section 76. In this case also, displaying of the distance is the same as in the odometer mode mentioned above.

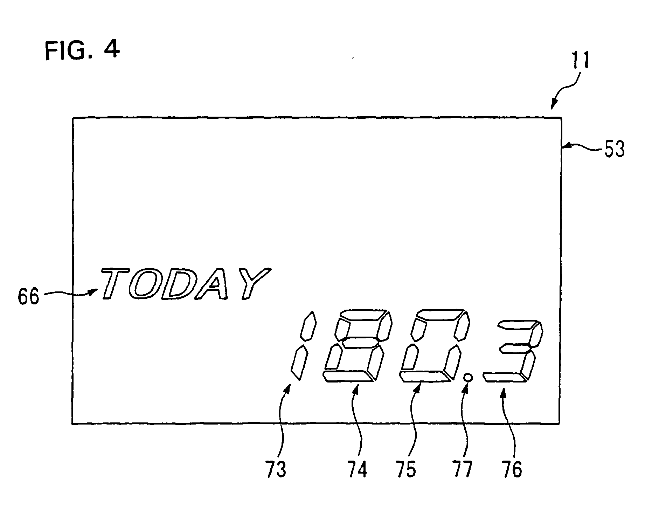

Then, in the present embodiment, if the current day driving distance mode is entered by selection via an appropriate operation of the operation input buttons 51 and 52,the switch display control portion 54 displays the letters "TODAY" by lighting them up in the current day driving distance mode display section 66. In addition, based on the output signal from the system clock 21 and the detection signal from the wheel rotation speed sensor 27, the switch display control portion 54, displays ".", which indicates the decimal point by lighting it in the decimal point display section 77, while displaying the current day driving distance that it has been adding and memorizing since the reset time at 0:00 midnight immediately before, by lighting up the necessary elements among the first display section 71, the second display section 72, the third display section 73, the fourth display section 74, the fifth display section 75 and the sixth display section 76. In this case also, displaying of the distance is the same as in the odometer mode mentioned above. For example, if the current day driving distance was 180.3Km, as shown in Fig. 4, while displaying the letters "TODAY" in the current day driving distance mode display section 66, it displays "1" in the third display section 73, "8" in the fourth display section 74, "0" in the fifth display section 75, "." in the decimal point display section 77 and "3" in the sixth display section 76.

In addition, the driving distance displayed in this current day driving distance mode is calculated based on the detection signal from the wheel rotation speed sensor 27, the accumulation is started at the 0:00 midnight immediately before, and is automatically reset to zero at the next 0:00 midnight. In other words, the display section 1 I calculates and displays the driving distance per day of the vehicle.

In addition, in the present embodiment, if the external air temperature display mode is entered by selection via an appropriate operation of the operation input buttons 51 and 52, the switch display control portion 54 displays the two-digit number of the external air temperature by lighting it up in the fourth display section 74 and fifth display section 75 based on the detection signal from the external air temperature sensor, while displaying the letters "AIR" by lighting them up in the external air temperature display mode display section 67, and in addition, it displays "C" in the sixth display section 76, while displaying "°" by lighting it up in the degree display section 78 to display "°C".

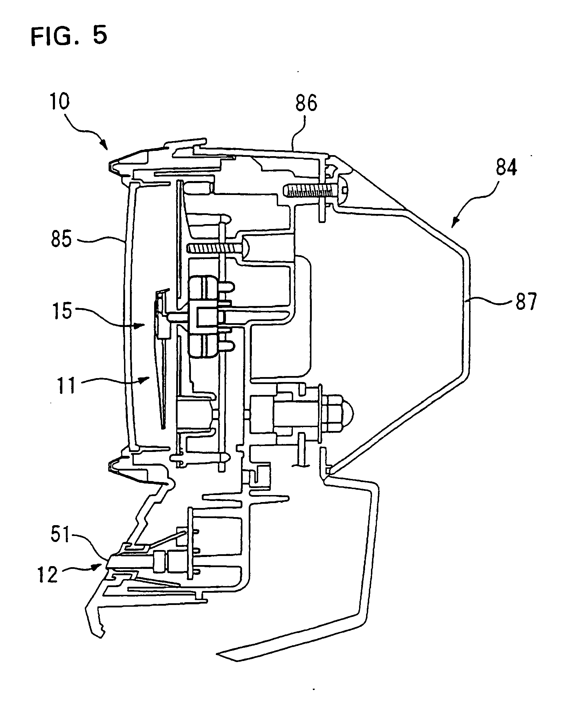

Then, as shown in Fig. 5, the information display apparatus for a vehicle 10 of the present embodiment is constituted by the display section 11 and the operation input portion 12 described above and a case 84, which protects them while supporting them.

The case 84 has a front cover portion 85, which covers the front side of the display section 11, a case main body portion 86 that covers the side portion and the rear portion of the display section 11 while supporting it and a rear cover portion 87 that covers the rear opening of the case main body portion 86, and it is provided with the operation input buttons 51 and 52 of the operation input portion 12 on the front cover portion 85.

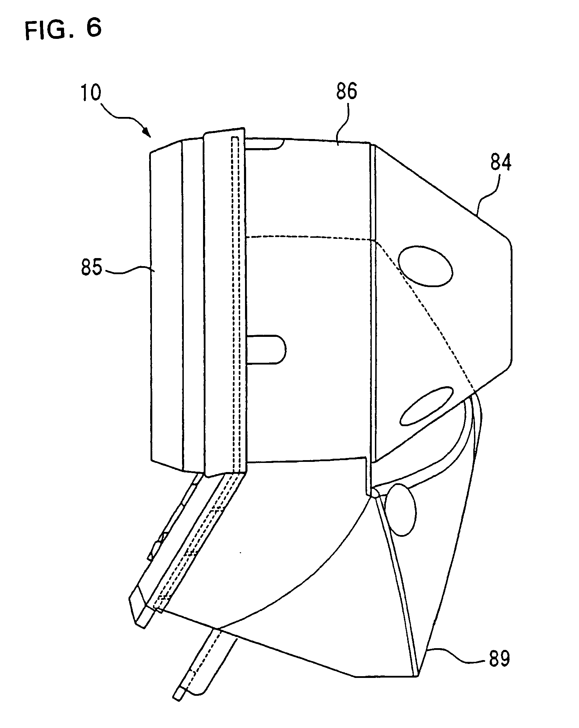

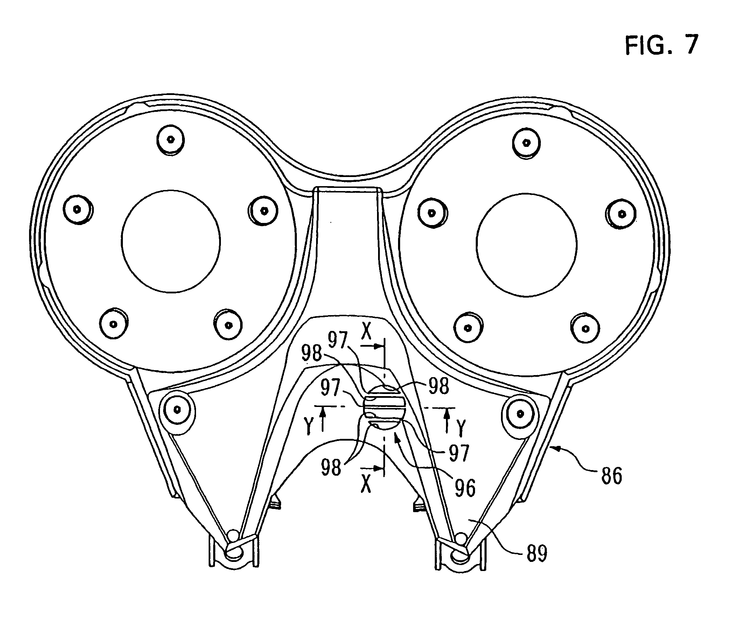

As shown in Fig. 6 and Fig. 7, the case main body portion 86 has a stretched out portion 89 that forms an elongated shape protruding in the rear direction while avoiding interference with a head light, not shown in the figure, and enlargement of the internal space is intended via this stretched out portion 89. Thus, a large number of electrical parts can be placed inside the case 84.

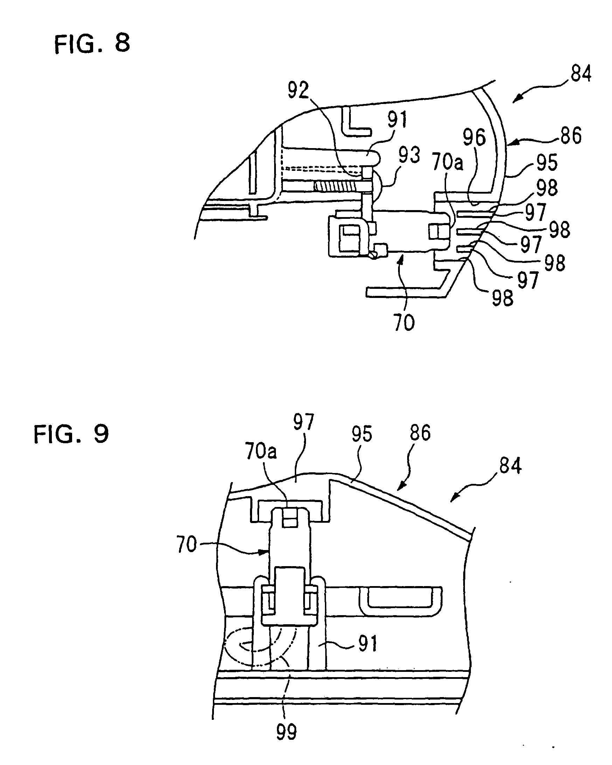

For example, in the present embodiment, an external air temperature sensor 70 is placed inside the case 84. Specifically, as shown in Fig. 8, a mounting platform portion 91 for mounting the external air temperature sensor 70 is formed in the case main body portion 86 of the case 84, and in a position where a front side detection portion 70a is oriented towards the back side of the case 84, a mounting edge portion 92, which protrudes sideways, is mounted on the mounting platform portion 91 and in this state, the external air temperature sensor 70 is fixed to the mounting platform portion 91 by a screw 93 that penetrates the mounting edge portion 92 and screws itself into the mounting platform portion 91.

In addition, as shown in Fig. 7 through Fig. 9, on the stretched out portion 89 of the case main body portion 86, at a position opposite to the front end of the external air temperature sensor 70, a hole 96 is formed, which passes through to the back side. Here, a plurality of divider plates 97 are formed in the hole 96, which are orthogonal to the hole 96 and mutually parallel, and as a result the hole 96 is constituted by a plurality of slits 98.

Here, as shown in Fig. 9, with the external air temperature sensor 70 placed inside the case 84, the sensor 70 is linked to the display section 11, which is similarly mounted inside the case 84, by a harness 99 extending from the base end side, and is only handled inside the case 84.

In addition, since an increase in the space inside the case 84 is intended through the stretched out portion 89, it is also possible to build in a turning indicator relay and such in the case 84.

According to the present embodiment described above, since the display section 11 calculates and displays the driving distance per day of the vehicle based on the output signal from the system clock 21 and the detection signal from the wheel rotation speed sensor 27 that are installed on the vehicle, vehicle-related information, that is, the driving distance of the vehicle per day, can be displayed. Therefore, the commercial appeal of a vehicle can be increased with this unit installed.

As described above in detail, since a display section calculates and displays the driving distance per day of a vehicle based on the output signal from a system clock and the detection signal from a wheel rotation speed sensor that are installed on the vehicle, vehicle-related information, for example the driving distance of a vehicle per day, can be displayed. Therefore, the commercial appeal of a vehicle can be increased with this unit installed.

## Claims

1. A two-wheeled motor vehicle having an information display apparatus comprising a display section (11) for receiving a detection signal from a plurality of detection means (20, 22, 27, 33, 34, 41, 42, 49, 70), which detect vehicle-related information, and displaying the vehicle-related information,
the display section (11) being connected to clock means (21) mounted on the vehicle, and calculating and displaying driving distances of the vehicle based on a detection signal from a driving distance detection means (27) that detects the driving distance of the vehicle, among the plurality of detection means (20, 22, 27, 33, 34, 41, 42, 49, 70), said display section (11) having a switch display section (45) comprising a current day driving distance mode display means (66) for calculating and displaying the driving distance per day of the vehicle based on an output signal from the clock means (21) and a detection signal from the driving distance detection means (27),
**characterized in that**
the switch display section (45) additionally comprises:
an odometer mode display means (60) for displaying the total driving distance of the vehicle that it has been adding and memorizing based on an output signal from the driving distance detection means (27), and
a trip meter mode display means (61) for displaying the driving distance of the vehicle that it has been adding and memorizing based on an output signal from the driving distance detection means (27) since the latest reset time of the trip meter mode,
wherein the information display apparatus is mounted on a top bridge in a state where it is placed on the front side of a handlebar, above a head light,
the display section (11) has a tachometer (15) which is installed on the right side of the front portion, a speed meter (24) which is installed on the left side of the front portion, and the switch display section (45) which is installed at the center of the front portion, and
the switch display section (45) has a switch display section main body (53) which forms a display, and a switch display control portion (54) which controls display of the switch display section main body (53) whose display mode is switched through an appropriate operation of operation input buttons (51, 52) at two locations, which operation input buttons (51, 52) constitute an operation input portion (12) mounted below the display section (11).

## Patentansprüche

1. Zweiradmotorfahrzeug mit einer Informationsanzeigevorrichtung, welche einen Anzeigeabschnitt (11) umfasst zum Erhalt eines Erfassungssignals von einer Mehrzahl von Erfassungsmitteln (20, 22, 27, 33, 34, 41, 42, 49, 70), welche fahrzeugbezogene Information erfassen, und zum Anzeigen der fahrzeugbezogenen Information,
wobei der Anzeigeabschnitt (11) mit einem an dem Fahrzeug angebrachten Taktgebermittel (21) verbunden ist und Fahrdistanzen des Fahrzeugs basierend auf einem Erfassungssignal von einem Fahrdistanzerfassungsmittel (27), welches die Fahrdistanz des Fahrzeugs erfasst, aus der Mehrzahl von Erfassungsmitteln (20, 22, 27, 33, 34, 41, 42, 49, 70) berechnet und anzeigt, wobei der Anzeigeabschnitt (11) einen Schaltanzeigeabschnitt (45) hat, welcher ein Aktuelle-Tagesfahrdistanz-Modus-Anzeigemittel (66) umfasst, um die Fahrdistanz pro Tag des Fahrzeugs basierend auf einem Ausgabesignal von dem Taktgebermittel (21) und einem Erfassungssignal von dem Fahrdistanzerfassungsmittel (27) zu berechnen und anzuzeigen,
**dadurch gekennzeichnet,**
**dass** der Schaltanzeigeabschnitt (45) zusätzlich umfasst:
ein Kilometerzählermodus-Anzeigemittel (60), um die Gesamtfahrdistanz des Fahrzeugs anzuzeigen, welche basierend auf einem Ausgangssignal von dem Fahrdistanzerfassungsmittel (27) addiert und gespeichert wurde, und
ein Teilstreckenzählermodus-Anzeigemittel (61), um die Fahrdistanz des Fahrzeugs anzuzeigen, welche basierend auf einem Ausgangssignal von dem Fahrdistanzerfassungsmittel (27) seit dem letzten Rücksetzzeitpunkt von dem Teilstreckenzählermodus addiert und gespeichert wurde,
wobei die Informationsanzeigevorrichtung oberhalb eines Scheinwerfers an einer oberen Brücke in einem Zustand angebracht ist, in welchem sie an der Vorderseite eines Lenkers angeordnet ist,
wobei der Anzeigeabschnitt (11) einen Drehzahlmesser (15) hat, welcher auf der rechten Seite von dem vorderen Abschnitt eingebaut ist, einen Geschwindigkeitsmesser (24) hat, welcher auf der linken Seite von dem vorderen Abschnitt eingebaut ist, und den Schaltanzeigeabschnitt (45) hat, welcher in der Mitte von dem vorderen Abschnitt eingebaut ist, und
der Schaltanzeigeabschnitt (45) einen Schaltanzeigeabschnitthauptkörper (53) hat, welcher eine Anzeige ausbildet, und einen Schaltanzeigesteuer/regelabschnitt (54) hat, welcher die Anzeige von dem Schaltanzeigeabschnitthauptkörper (53) steuert/regelt, dessen Anzeigemodus durch eine entsprechende Bedienung von Bedienungseingabeknöpfen (51, 52) an zwei Stellen geschaltet wird, welche Bedienungseingabeknöpfe (51, 52) einen Bedienungseingabeabschnitt (12) bilden, welcher unter dem Anzeigeabschnitt (11) angebracht ist.

## Revendications

1. Véhicule motorisé à deux roues comportant un appareil d'affichage d'informations comprenant une section d'affichage (11) pour recevoir un signal de détection à partir d'une pluralité de moyens de détection (20, 22, 27, 33, 34, 41, 42, 49, 70), qui détectent des informations connexes au véhicule, et afficher les informations connexes au véhicule,
la section d'affichage (11) étant connectée à un moyen d'horloge (21) monté sur le véhicule, et calculer et afficher des distances de déplacement du véhicule sur la base d'un signal de détection à partir d'un moyen de détection de distance de déplacement (27) qui détecte la distance de déplacement du véhicule, parmi la pluralité de moyens de détection (20, 22, 27, 33, 34, 41, 42, 49, 70), ladite section d'affichage (11) possédant une section d'affichage de commutation (45) comprenant un moyen d'affichage de mode de distance de déplacement de jour actuel (66) pour calculer et afficher la distance de déplacement par jour du véhicule sur la base d'un signal de sortie à partir du moyen d'horloge (21) et un signal de détection à partir du moyen de détection de distance de déplacement (27),
**caractérisé en ce que**
la section d'affichage de commutation (45) comprend en outre :
un moyen d'affichage de mode de compteur kilométrique (60) pour afficher la distance de déplacement totale du véhicule qu'il a ajoutée et réaliser une mémorisation sur la base d'un signal de sortie à partir du moyen de détection de distance de déplacement (27), et un moyen d'affichage de mode de totaliseur partiel (61) pour afficher la distance de déplacement du véhicule qu'il a ajoutée et réaliser une mémorisation sur la base d'un signal de sortie à partir du moyen de détection de distance de déplacement (27) depuis le dernier instant de remise à zéro du mode de totaliseur partiel,
dans lequel l'appareil d'affichage d'informations est monté sur un pont supérieur dans un état où il est placé sur le côté avant d'un guidon, au-dessus d'un phare,
la section d'affichage (11) possède un tachymètre (15) qui est installé sur le côté droit de la partie avant, un indicateur de vitesse (24) qui est installé sur le côté gauche de la partie avant, et la section d'affichage de commutation (45) qui est installée au centre de la partie avant, et
la section d'affichage de commutation (45) possède un corps principal de section d'affichage de commutation (53) qui forme un affichage, et une partie de commande d'affichage de commutation (54) qui commande l'affichage du corps principal de section d'affichage de commutation (53) dont le mode d'affichage est commuté par l'intermédiaire d'une opération appropriée de boutons d'entrée d'opération (51, 52) dans deux emplacements, lesquels boutons d'entrée d'opération (51, 52) constituent une partie d'entrée d'opération (12) montée en dessous de la section d'affichage (11).
